# EUROPEAN PATENT SPECIFICATION

(11) **EP 0 667 202 B1**
(45) Date of publication and mention of the grant of the patent: **22.10.1997**
(21) Application number: 94925014.6
(22) Date of filing: 26.08.1994
(51) Int. Cl.: B23H 7/02

(54) **PROTECTIVE CONSTRUCTION OF SEALING MECHANISM FOR PROCESSING LIQUID VESSEL IN WIRE ELECTRICAL DISCHARGE MACHINE**
SCHUTZANORDNUNG FÜR DIE DICHTUNG DES BEARBEITUNGSFLÜSSIGKEITBEHÄLTERS EINER DRAHTSCHNEIDEFUNKENEROSIONSMASCHINE
PROTECTION INTEGREE A UN DISPOSITIF D'ETANCHEITE DESTINE AU RECIPIENT CONTENANT LE LIQUIDE DE TRAITEMENT D'UNE MACHINE A DECHARGES ELECTRIQUES PAR FIL

(30) Priority: 27.08.1993 JP 235431/93
(43) Date of publication of application: 16.08.1995
(73) Proprietor: FANUC LTD., Minamitsuru-gun, Yamanashi 401-05 (JP)
(72) Inventor: ISHIHARA, Mitsuyoshi, Fanuc Dai-3 Vira-karamatsu, Minamitsuru-gun, Yamanashi 401-05 (JP)
(74) Representative: Billington, Lawrence Emlyn
(86) International application number: JP9401417
(87) International publication number: WO9505915

(56) References cited:
- JP-A- 1 257 522
- JP-A- 1 306 130
- JP-A- 4 146 025
- JP-A- 4 159 023

## Description

This invention generally relates to a wire cut electric discharge machine which executes electric discharge machining by soaking a workpiece in a machining fluid filled in a machining fluid tank, and more particularly to a seal mechanism provided between an arm member with a wire guide at a distal end thereof, and one side wall of the machining fluid tank which is penetrated by the arm member.

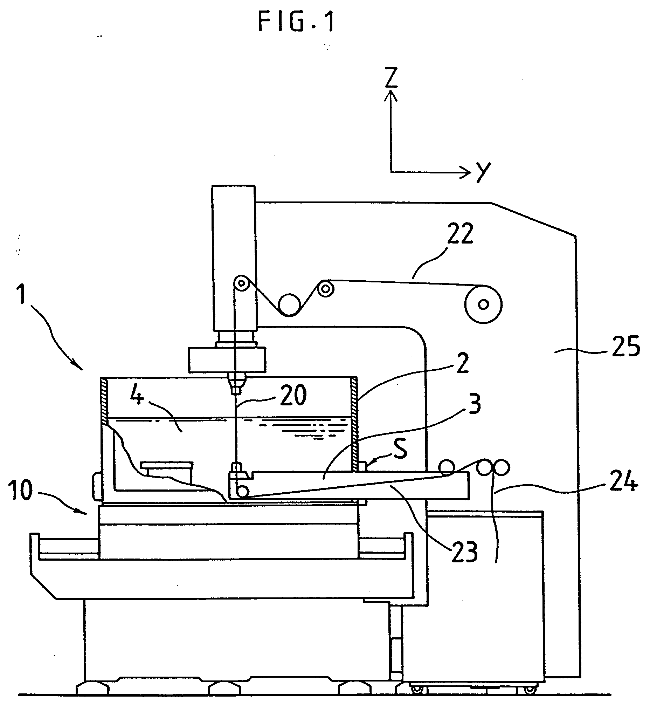

In general, wire cut electric discharge machines for executing electric discharge machining operations by soaking a workpiece in machining fluid are arranged as shown in Fig. 1. A machining fluid tank 1 filled with machining fluid 4 therein is fixedly mounted on an XY table 10, which is shiftable in both an X-axis direction (i.e. a direction perpendicular to the sheet of Fig. 1) and a Y-axis direction (i.e. a right-and-left direction on the sheet of Fig. 1), orthogonal to each other. A work table (not shown) is secured to the inside of the machining fluid tank 1, and a workpiece (not shown) is fixed on the work table. Accordingly, both the machining fluid tank 1 and the workpiece can be moved in response to the movement of the table 10 along the XY plane.

On the other hand, a wire electrode 20 is fed forward from a wire electrode supply section 22 and extends vertically passing through a machining portion of workpiece along the Z-axis direction. Then, the wire electrode 20 passes through a lower guide section 23, is finally taken up by a take-up and storage section 24 and stored in a wire box. The lower guide section 23 has its base fixed to the column 25 and its distal end supported by arm member 3 disposed to extend towards the center of machining fluid tank 1 in the direction of Y-axis.

During electric discharge machining operations, the XY table 10 and the machining fluid tank 1 secured to this table 10 are driven in both the X-axis direction and Y-axis direction under the control of the NC apparatus. Since, the lower arm member 3 with its base end fixed to the column 25 will not move, the machining fluid tank 1 and the lower arm member 3 move relative to each other. More specifically, the lower arm member 3 moves in both Y-axis direction (a movement in the axial direction of the lower arm member 3; i.e. a movement in a direction penetrating the side wall 2 of the machining fluid tank 1) and X-axis direction (i.e. a movement for changing the position on the side wall 2 of the machining fluid tank 1 where the lower arm member 3 penetrates) with respect to the machining fluid tank 1.

For this reason, on the side wall 2 of the machining fluid tank 1 where the lower arm member 3 penetrates, there is formed a window allowing the lower arm member 3 to shift in both X and Y directions with respect to the machining fluid tank 1. To prevent a large amount of machining fluid from flowing out of the machining fluid tank 1 through this window, there is provided a seal mechanism S on this side wall 2.

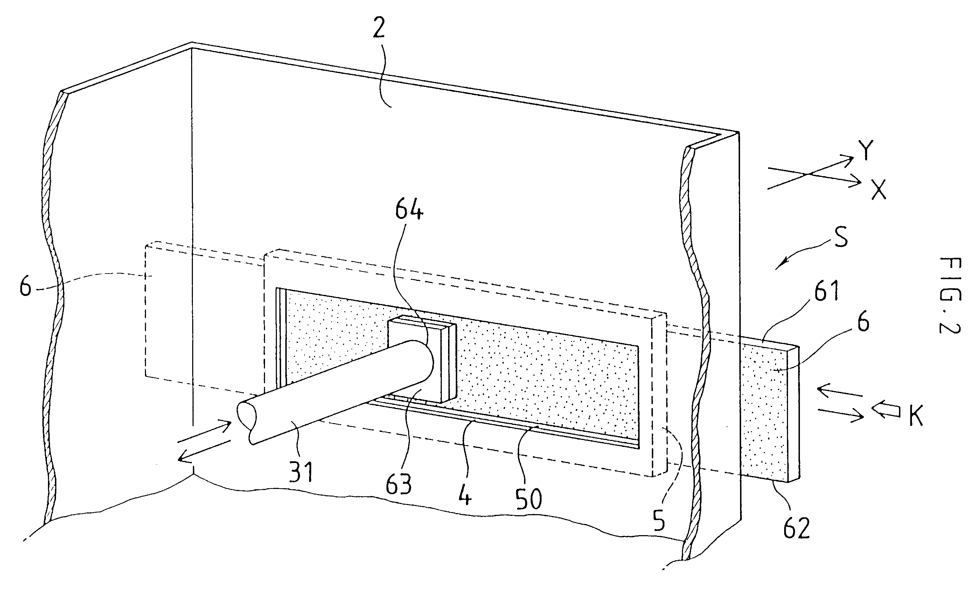

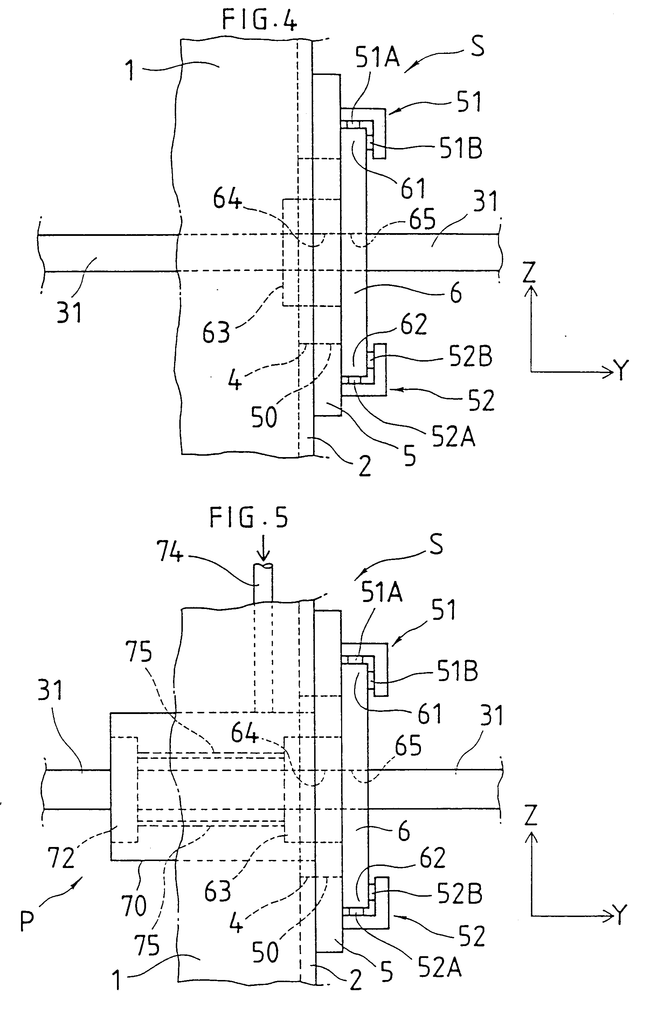

The construction of the seal mechanism S is shown in Figs. 2 and 4. Fig. 4 is a partly broken partial side view showing the appearance viewed from a direction of an arrow K shown in Fig. 2. An arm cover 31 integrally movable together with the lower arm (this arm cover integrally moving with the lower arm is hereinafter referred to as a lower arm member) penetrates the side wall 2 of the machining fluid tank 1, and a rectangular window 4 is opened on the side wall 2 with its longitudinal sides along the X direction. A seal base 5, having an opening 50 identical in shape and size with the window 4, is fixed on the outside surface of the side wall 2 of the machining fluid tank 1, so that the window 4 of the side wall 2 of the machining fluid tank 1 coincides with the opening 50 of the seal base 5.

The seal base 5, at its upper and lower edges, has bearing mechanisms 51 and 52 for holding a later-described seal plate 6 on the X-Z plane, as well as for allowing the sliding movement of the seal plate 6 in the X direction. These bearing mechanisms 51 and 52 include a plurality of roller bearings 51A and 52A for regulating the movement of the seal plate 6 in the up-and-down direction (Z direction), and a plurality of roller bearings 51B and 52B for regulating the movement of the seal plate 6 in the Y direction withstanding the pressure of the liquid in the machining fluid tank 1, i.e. for regulating the movement of the seal plate 6 perpendicular to the surface of the side wall 2 of the machining fluid tank 1 on which the window 4 is formed. These plural roller bearings 51A, 51B, 52A and 52B are arrayed in respective bearing mechanisms 51 and 52 in the X direction (the longitudinal direction of the opening 50) at regular intervals, thereby guiding the upper and lower edges 61 and 62 of the sealing plate.

Furthermore, a flange-shaped sealing member 63 with oil sealing mechanism is securely fixed to the central portion of the inside surface of the sealing plate 6. The lower arm member 31, from the inside of the machining fluid tank 1, passes through an insertion hole 64 formed at the central portion of the sealing member 63 and an insertion hole 65 formed at the central portion of the sealing plate 6 to extend out of the machining fluid tank 1, with its base end fixed to the column of the wire cut electric discharge machine body.

Accordingly, during electric discharge machining operations, the sealing plate 6 slides on the seal base 5 together with the lower arm member 31 and the sealing member 63 in the longitudinal direction of the opening 50, i.e. in the X direction. Moreover, the lower arm member 31 slides through the insertion hole 65 of the sealing plate 6 and the insertion hole 64 of the sealing member 63, that is, the lower arm member 31 moves in the Y-direction with respect to the sealing plate 6.

The sealing plate 6 is always regulated to hermetically contact with the seal base 5 during its movement in the X direction with respect to the machining fluid tank 1 (i.e. with respect to the seal base 5), so that the opening 50 formed on the seal base 5 is always closed by the sealing plate 6. Accordingly, it is prevented that a large amount of machining fluid leaks out of the machining fluid tank 1 through the window 4 formed on one side wall of the machining fluid tank 1 and the opening 50 of the seal base 5. Furthermore, as the lower arm member 31 penetrates the sealing member 63, machining fluid is prevented from leaking out of the machining fluid tank 1 through the insertion hole 65 of the sealing plate 6 by the sealing member 63.

As explained above, by providing the machining fluid tank 1 with the sealing mechanism with structure as shown in Figs. 2 and 4, it becomes possible to suppress to a small amount the leak of machining fluid (normally water) flowing out of the machining fluid tank 1 during electric discharge machining operations, while allowing the relative movement between the machining fluid tank 1 and the lower arm member 31.

A similar prior art arrangement to that just described is disclosed in JP-A-1-306130

However, according to this conventional sealing mechanism, when the discharge machining operations lasted a long time, there was possibility that foul material such as sludge contained in the machining fluid, entered and settled in the sliding portion between the sealing plate 6 and the seal base 5 or the clearance between the sealing member 63 and the lower arm member 31 penetrating the sealing member 63 and, accordingly, the sliding resistance was so remarkably increased that a large backlash was arisen in the actuation of the XY table 10 mounting the machining fluid tank 1.

Hence, to prevent various parts of such a sealing mechanism S from being contaminated with foul material, there is known a method in which clean water is sprayed to the sealed portion during electric discharge machining operations. However, it is difficult to surely prevent the fouling from entering throughout a wide range of area; therefore, it seems that no satisfactory results can be obtained by this method. Accordingly, the conventional methods forced us to execute frequent maintenances including cleaning-up operations of the sealing mechanism S, entailing decline of operating efficiency.

The object of the present invention is to provide a sealing mechanism protecting structure for a wire cut electric discharge machine capable of preventing the fouling such as sludge included in machining fluid in the machining fluid tank from entering and settling in the sealing mechanism provided in a portion of a side wall of the machining fluid tank where the lower arm penetrates therethrough, thereby suppressing increase of resistance in the sliding movement of the lower arm with respect to the machining fluid tank.

In order to accomplish the above object, the present invention provides a wire cut electric discharge machine, comprising a machining fluid tank mounted on a movable table, a window opened on one side wall of the machining fluid tank, an arm member inserted into the window, the arm member having a distal end equipped with a wire guide and a base end fixed to a column of the electric discharge machine, and a sealing mechanism provided between the machining fluid tank and the arm member so as to allow relative movement therebetween, as well as to prevent a large amount of machining fluid in the machining fluid tank from flowing out of the machining fluid tank through the window, wherein a virtually closed space is defined within the machining fluid tank by a box-like partitioning member and the sealing mechanism, the box-like partioning member covering the sealing mechanism and being fixed, in the machining fluid, to the machining fluid tank, a machining fluid supply means being fixed to the partitioning member for supplying machining fluid from outside to the closed space, the machining fluid supply means filling the closed space with pressurized machining fluid so as to prevent the machining fluid in the machining fluid tank from reaching the sealing mechanism.

In a preferable mode, the box-like partitioning member covering the sealing mechanism has a wall surface confronting the sealing mechanism, the wall surface being provided with a window, the window letting the arm member penetrate therethrough and also allowing relative movement between the partitioning member and the arm member in a direction perpendicular to an axis of the arm member; and a window closing member is provided between the arm member and the wall surface having the window, the window closing member allowing the partitioning member and the arm member to move relatively to each other while always closing the window leaving a small clearance during the relative movement.

Further preferably, the window closing member comprises: a plate member having at the center thereof an insertion hole having a size just allowing the arm to freely pass therethrough; and foldable bellows provided at right and left sides of the plate member, each bellows having a base end connected to the plate member and a distal end fixed to a predetermined position of the partitioning member.

As described above, according to the present invention, a closed space is formed by the partitioning member and the sealing mechanism, by covering the sealing mechanism, by the partioning member, which seals between the machining fluid tank and the arm member, and the machining fluid is supplied into the closed space to fill it with machining fluid, thereby preventing the machining fluid in the machining fluid tank contaminated by foul material such as sludge from reaching the sealing mechanism.

### BRIEF DESCRIPTION OF DRAWINGS

Fig. 1 is a partly broken side view showing the arrangement of a movable table, a machining fluid tank, a lower arm, etc, in a wire cut electric discharge machine which executes electric discharge machining with a workpiece soaked in machining fluid;
Fig. 2 is a partly broken view showing a sealing mechanism conventionally adopted at the lower arm penetrating portion of the machining fluid tank, seen from the inside of the machining fluid tank;
Fig. 3 is a partly broken view showing a sealing mechanism protecting structure in accordance with the present invention, seen from the inside of the machining fluid tank;
Fig. 4 is a partly broken side view showing the appearance of the sealing mechanism shown in Fig. 2, seen from the direction of an arrow K in Fig. 2; and
Fig. 5 is a partly broken side view showing the appearance of the sealing mechanism protecting structure shown in Fig. 3, seen from the direction of an arrow L in Fig. 3.

The sealing structure of the present invention, when compared with the sealing mechanism S shown as prior art in Figs. 2 and 4, is characterized in that a seal protecting mechanism portion P is added to the sealing mechanism S for preventing any fouling, such as sludge contained in the machining fluid in the machining fluid tank, from entering and settling in the sealing mechanism.

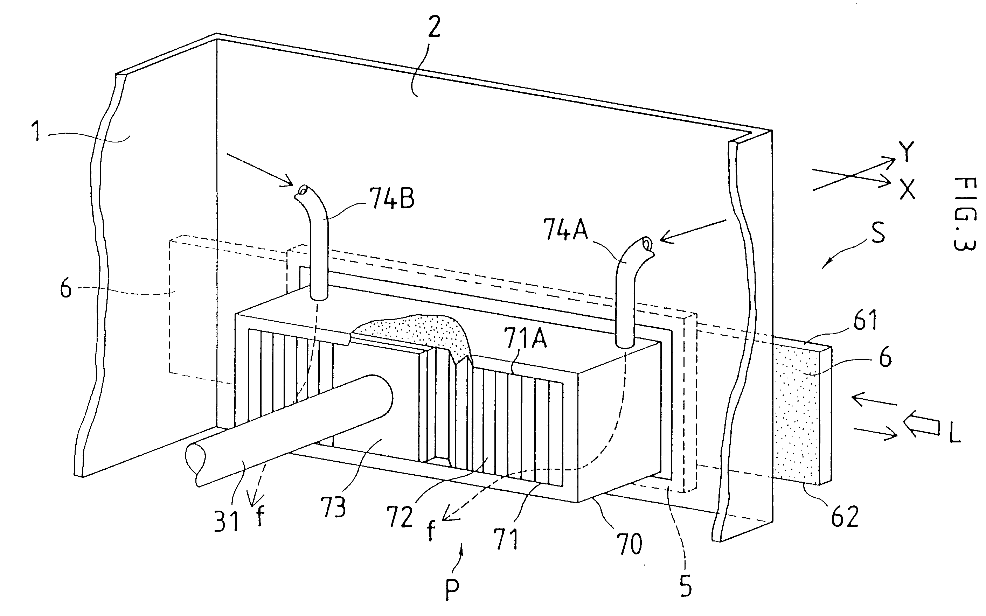

Figs. 3 and 5 show one embodiment of the sealing mechanism protecting structure in accordance with the present invention, of which Fig. 3 is a partly broken view seen from the inside of the machining fluid tank, and Fig. 5 is a partly broken partial side view seen from the direction of an arrow L in Fig. 3.

In both the drawings, portions or members identical with those disclosed in Figs. 2 or 4 are denoted by identical symbols or numerals, and the sealing mechanism denoted by symbol S has a structure similar to that of Figs. 2 and 4.

More specifically, the outline of the sealing mechanism S protected by the sealing mechanism protecting structure of the present invention is as follows.

On a side wall 2 of a machining fluid tank 1 where a lower arm member 3 penetrates, there is formed a window 4. A seal base 5, having an opening 50 identical in configuration and size with the window 4, is fixed to the outside surface of the side wall 2 of the machining fluid tank 1, so that the window 4 coincides with the opening 50. The seal base 5, at its upper and lower edges, has bearing mechanisms 51 and 52 for holding a sealing plate 6, thereby allowing the sliding movement of the sealing plate 6.

These bearing mechanisms 51 and 52 include roller bearings 51A and 52A for regulating the movement of the sealing plate 6 in the up-and-down direction (Z direction), and roller bearings 51B and 52B for regulating the movement of the sealing plate 6 in the direction for withstanding the liquid pressure in the machining fluid tank 1, i.e. for regulating the movement of the sealing plate 6 in a direction (Y direction) perpendicular to the surface of the sealing plate 6. These roller bearings, in groups each comprising several units, are arrayed along upper and lower edges of the seal base 5 at regular intervals, thereby guiding the upper and lower edges 61 and 62 of the sealing plate at their roller faces.

Furthermore, a flange-shaped sealing member having an oil sealing mechanism within is fixed to the central part of the sealing plate 6. The lower arm member 31 penetrates an insertion hole 64 formed at the central portion of the sealing member 63 and an insertion hole 65 formed at the same position of the sealing plate 6 successively, so as to extend out of the machining fluid tank 1, with its end fixed to the column 25 of the wire cut electric discharge machine body.

Next, the sealing mechanism S, particularly the sealing mechanism protecting structure P for preventing the fouling, such as sludge contained in the machining fluid in the machining fluid tank, from entering and settling in the sliding portion between the sealing plate 6 and the seal base 5 or the clearance between the sealing member 63 and the lower arm member 31 penetrating the sealing member 63, will be explained with reference to Figs. 3 and 5.

The sealing mechanism protecting structure P comprises a partitioning member 70 made of sheet metal formed into a box-like shape (a box consisting of two pairs of confronting side plates and one bottom plate) arranged with its opening side facing the window 4 of the side wall 2 of the machining fluid tank 1 from inside of machining fluid tank 1 and fixed to the side wall 2 of the machining fluid tank 1.

At a portion corresponding to the bottom plate of the partitioning member 70 (a plate facing the side wall 2), there is formed a rectangular window 71 as shown in Fig. 3. This window 71 is located on the XZ plane and extends in the X direction.

Furthermore, a movable plate member 73 in the form of a square thin plate connected at its right and left sides (X direction) to bellows is provided inside the partitioning member 70 so as to close the window 71 of the partitioning member 70. The movable plate member 73 is fixed to the sealing member 63 of the sealing mechanism S through a plurality of connecting members 75 provided between itself and the sealing member 63. Thus, the movable member 73 is integral with the sealing member 63 (accordingly, integral with the sealing plate 6) and shifts in the X direction. At the center of the movable plate member 73, there is opened a hole just allowing the lower arm member 31 to slide therethrough. The lower arm member 31 is inserted into this hole.

On the other hand, opposite ends of the bellows, with their bases connected to the movable plate member 73, are fixed to the partitioning member 70. The bellows 72 is foldable in the direction in which the sealing plate 6 slides against the machining fluid tank 1, i.e. in the X direction, for expansion and contraction. Between the bellows 72 and the partitioning member 70, there is maintained a clearance large enough not only for allowing the folding motion of the bellows 72 when the movable plate member 73 is shifted but also for allowing machining fluid to flow from the machining fluid tank 1 into the inside space of the partitioning member 70 or vice versa. No special sealing means is provided between the central hole of the movable plate member 73 and the lower arm member 31, so that a small amount of machining fluid can flow through the clearance between them from the machining fluid tank 1 into the inside space of the partitioning member 70 or vice versa.

In this manner, the rectangular box-like partitioning member 70 has the bottom plate with its window 71 virtually closed by the joint member of the movable plate member 73 and the bellows 72. The opening of the partitioning member 70 is kept closed as the sealing base 5, fixed to the side wall 2 of the machining fluid tank 1, is always in contact with the sealing plate 6, so that the inside of the partitioning member 70 forms a virtually closed space (hereinafter referred to as sealing mechanism protecting space).

Of four side walls constituting the box-like partitioning member 70, the top wall located along the XY plane is provided with two fluid supply pipes 74A and 74B installed apart a certain distance from each other in the X direction as shown in Fig. 3. Through these pipes 74A and 74B machining fluid is supplied into the sealing mechanism protecting space. These pipes 74A and 74B are connected to a clean machining fluid source (not shown) via a pump means (not shown). The pump means is capable of supplying clean machining fluid into the sealing mechanism protecting space in the partitioning member 70 at a pressure higher than the pressure of the machining fluid in the space outside the sealing mechanism protecting space (i.e. in the machining fluid tank 1).

During electric discharge machining operations, under the condition that the machining fluid tank 1 is filled with machining fluid, the pump means constantly supplies clean machining fluid of high pressure into the sealing mechanism protecting space defined by the partitioning member 70 through the fluid supply pipes 74A and 74B. Thus, the sealing mechanism protecting space is filled with clean machining fluid.

When the XY table 10 securely mounted with the machining fluid tank 1 is driven in the X direction and the Y direction with a motor controlled by the NC apparatus, the lower arm member 31 is moved in the X direction and the Y direction with respect to the machining fluid tank 1.

The relative movement of the lower arm member 31 in Y direction is a movement of the lower arm 31 in the longitudinal direction thereof so as to allow the lower arm member 31 to cause the lower arm 31 to pass through the sealing mechanism S and the sealing mechanism protecting structure P. That is, this movement causes the lower arm member 31 to pass through the insertion hole 64 of the sealing member 63, the insertion hole 65 of the sealing plate 6, and the central hole of the movable plate member 73. On the other hand, the relative movement of the lower arm member 31 in the X direction causes the lower arm member 31 to move simultaneously with the sealing member 63, the sealing plate 6 and the movable plate member 73 in the same direction by the same distance with respect to the machining fluid tank 1. The movement of the movable plate member 73 in the X direction causes folding or contracting and expanding motion of the bellows 72 having its base end connected to the movable member 73 and its distal end fixed to the partitioning member 70.

During electric discharge machining operations, while the lower arm member 31 is moving in the X and Y directions with respect to the machining fluid tank 1 as described above, the sealing plate 6 slides on the outside surface of the seal base 5 to constantly close the opening 50 of the seal base 5. Thus, there is no fear that the machining fluid, which flows through the fluid supply pipes 74A and 74B into the sealing mechanism protecting space defined by the partitioning member 70, leaks out of the sealing mechanism protecting space via the opening 50 of the seal base 5 by a large amount. Furthermore, the lower arm member 31 is sealed by the sealing member 63 fixed to the sealing plate 6. Hence, the machining fluid seldom leaks out of the sealing mechanism protecting space via the clearance between the lower arm member 31 and respective insertion holes of the sealing member 63 and the sealing plate 6.

On the other hand, there are provided small clearances between the base plate of the partitioning member 70, forming the window 71, and the upper and lower edges of the bellows 72 connected to the movable plate member 73, thereby allowing the machining fluid, supplied into the sealing mechanism protecting space, to flow into the machining fluid tank 1 due to the pressure difference, as indicated by a dotted line f in Fig. 3. Furthermore, no special sealing member is provided at the insertion hole of the movable plate member 73 into which the lower arm member 31 is inserted. Thus, the machining fluid fed into the sealing mechanism protecting space can also flow into the machining fluid tank 1 through a clearance between the insertion hole of the movable plate member 73 and the lower arm member 31.

In this manner, during the electric discharge machining operation, clean machining fluid is constantly supplied through the fluid supply pipes 74A and 74B into the sealing mechanism protecting space by pump means, and so the liquid pressure within the sealing mechanism protecting space is maintained higher than that of the machining fluid in the machining fluid tank 1 to cause the machining fluid in the sealing mechanism protecting space to flow into the machining fluid tank 1, thereby preventing the contaminated machining fluid in the machining fluid tank 1 from flowing back into the sealing mechanism protecting space.

As described above, the sealing structure of the present embodiment comprises a sealing mechanism using a sealing plate slidable against one of the side walls of the machining fluid tank and a box-like partitioning member, which covers the sealing mechanism and is fixed to the machining fluid tank, the partitioning member providing a partitioned space into which clean machining fluid is constantly supplied to cause a small volume of machining fluid flow into the machining fluid tank from the partitioned space, thereby enabling the sealing structure to prevent the contaminated machining fluid in the machining fluid tank from reaching the sealing mechanism.

As a result, a surface between the sealing plate and the confronting side wall of the machining fluid tank (or the seal base fixed on the side wall) is always kept clean over a long period of time, with the result that sticking of foul material such as sludge contained in the machining fluid is not brought about to hinder the slide movement of the sealing plate.

Moreover, as described above, the inside surface of the sealing plate slidable against one side wall of the machining fluid tank is soaked in the clean machining fluid in the space comparted by the partitioning member, allowing a small volume of clean machining fluid to always leak outside of the machining fluid tank through the clearance between the sealing plate and the side wall of the machining fluid tank, confronting the sealing plate, or the seal base fixed to the side wall. Thus, fouling particles from the outside of the machining fluid tank can be prevented from entering and settling in the clearance of the sliding portion or the like of the sealing mechanism.

## Claims

1. A wire cut electric discharge machine, comprising a machining fluid tank (1) mounted on a movable table (10), a window (4) opened on one side wall of said machining fluid tank, an arm member (31) inserted into said window (4), said arm member (31) having a distal end equipped with a wire guide and a base end fixed to a column of the electric discharge machine, and a sealing mechanism (S) provided between said machining fluid tank (1) and said arm member (31) so as to allow relative movement therebetween and to prevent a large amount of machining fluid in the machining fluid tank (1) from flowing out of the machining fluid tank (1) through said window (4), characterised in that:
said sealing mechanism (S) is covered with a box-like partitioning member (70) by fixedly attaching the latter to the machining fluid tank (1), so that a nearly closed space may be defined within said machining fluid tank (1) by the partitioning member (70) and the sealing mechanism (S),
a machining fluid supplying means (74A,B) is fixed to said partitioning member (70) for supplying machining fluid from outside to said closed space, and
said machining fluid supplying means (74A,B) is able to fill said closed space with pressurized machining fluid so as to prevent the machining fluid in said machining fluid tank (1) from reaching said sealing mechanism (S).

2. The wire cut electric discharge machine in accordance with claim 1, wherein
said box-like partitioning member (70) covering said sealing mechanism (S) has a wall surface confronting said sealing mechanism (S), said wall surface being provided with a window (71), said window (71) letting said arm member (31) penetrate therethrough and also allowing relative movement between the partitioning member (70) and the arm member (31) in a direction perpendicular to an axis of said arm member (31); and
a window closing member (72, 73) is provided between said arm member (31) and the wall surface having said window (71), said window closing member (72, 73) allowing said partitioning member (70) and said arm member (31) to move relatively to each other while always closing said window (71) leaving a small clearance during said relative movement.

3. The wire cut electric discharge machine in accordance with claim 2, wherein
said window closing member (72, 73) comprises:
a plate member (73) having at the center thereof an insertion hole having a size just allowing the arm to freely pass therethrough; and
a foldable bellows (72) provided at right and left sides of said plate member (73), each bellows (72) having a base end connected to said plate member (73) and a distal end fixed to said partitioning member (70) at a predetermined portion thereof.

4. The wire cut electric discharge machine in accordance with claim 3, wherein
said plate member (73) is fixed to said sealing mechanism (S) through connecting members (75), so that said plate member (73) can be moved integrally with a sealing plate (6) constituting said sealing mechanism (S).

## Patentansprüche

1. Elektrische Entladungsdrahtschneidemaschine, die umfaßt: einen Bearbeitungsflüssigkeitstank (1), der auf einem beweglichen Tisch (10) montiert ist, ein Fenster (4), das sich in einer Seitenwand des Bearbeitungsflüssigkeitstanks öffnet, ein Armteil (31), das in das Fenster (4) eingeführt ist, wobei das Armteil (31) ein körperfernes Ende hat, das mit einer Drahtführung und einem an einer Säule der elektrischen Entladungsdrahtschneidemaschine befestigten Basisende ausgestattet ist, und einen Adichtungsmechanismus (5), der zwischen dem Bearbeitungsflüssigkeitstank (1) und dem Armteil (31) vorgesehen ist, um auf diese Weise eine relative Bewegung zwischen diesen zu gestatten und zu verhindern, daß eine große Menge der Bearbeitungsflüssigkeit in dem Bearbeitungsflilssigkeitstank (1) durch das Fenster (4) aus dem Bearbeitungsflüssigkeitstank (1) fließt, dadurch **gekennzeichnet,** daß
der Abdichtungsmechanismus (5) mit einem kastenähnlichen Unterteilungsteil (70) durch eine feste Anbringung des letzteren an dem Bearbeitungsflüssigkeitstank (1) abgedeckt ist, so daß ein dicht geschlossener Raum innerhalb des Bearbeitungsflüssigkeitstanks (1) durch das Unterteilungsteil (70) und den Abdichtungsmechanismus (5) definiert werden kann,
ein Bearbeitungsflüssigkeits-Zuführungsmittel (74A,B) an dem Unterteilungsteil (70) zum Zuführen von Bearbeitungsflüssigkeit von außen zu dem geschlossene Raum befestigt ist, und
das Bearbeitungsflüssigkeits-Zuführungsmittel (74A,B) in der Lage ist, den geschlossenen Raum mit unter Druck stehender Bearbeitungsflüssigkeit zu füllen, um auf diese Weise zu verhindern, daß die Bearbeitungsflüssigkeit in dem Bearbeitungsflüssigkeitstank (1) den Abdichtungsmechanismus (5) erreicht.

2. Elektrische Entladungsdrahtschneidemaschine nach Anspruch 1, bei der
das kastenähnliche Unterteilungsteil (70), welches den Abdichtungsmechanismus (5) abdeckt, eine Wandoberfläche hat, die dem Abdichtungsmechanismus (5) gegenübersteht, wobei die Wandoberfläche mit einem Fenster (71) versehen ist, welches Fenster (71) das Armteil (31) durch sich treten läßt und außerdem eine relative Bewegung zwischen dem Unterteilungsteil (70) und dem Armteil (31) in einer Richtung senkrecht zu einer Achse des Armteils (31) gestattet, und
ein Fensterschließteil (72, 73) zwischen dem Armteil (31) und der Wandoberfläche, die das Fenster (71) hat, vorgesehen ist, welches Fensterschließteil (72, 73) dem Unterteilungsteil (70) und dem Armteil (31) gestattet, sich relativ zueinander zu bewegen, wahrend es stets das Fenster (71) unter Belassen eines kleinen Zwischenraums während der relativen Bewegung schließt.

3. Elektrische Entladungsdrahtschneidemaschine nach Anspruch 2, bei der das Fensterschließteil (72, 73) umfaßt:
ein Plattenteil (73), das in seinem Zentrum ein Einführungsloch aufweist, welches eine Größe hat, die es gerade gestattet, daß der Arm frei durch dieses treten kann, und
jeweils einen Faltenbalg (72), der rechts- und linksseitig von dem Plattenteil (73) vorgesehen ist, wobei jeder Faltenbalg (72) ein Basisende, das mit dem Plattenteil (73) verbunden ist, und ein körperfernes Ende hat, das an dem Unterteilungsteil (70) bei einem vorbestimmten Teil desselben befestigt ist.

4. Elektrische Entladungsdrahtschneidemaschine nach Anspruch 3, bei der das Plattenteil (73) derart an dem Abdichtungsmechanismus (5) durch verbindungsteile (75) befestigt ist, daß das Plattenteil (73) als ein Ganzes mit einer Abdichtungsplatte (6) bewegt werden kann, was den Abdichtungsmechanismus (5) bildet.

## Revendications

1. Machine d'étincelage à découpe par fil, comprenant un réservoir de fluide d'usinage (1) monté sur une table mobile (10), une fenêtre (4) ouverte dans une paroi latérale dudit réservoir de fluide d'usinage, un bras (31) inséré dans ladite fenêtre (4), l'extrémité distale dudit bras (31) étant équipée d'un guide-fil et l'extrémité de base dudit bras étant fixée à une colonne de la machine d'étincelage ainsi qu'un mécanisme d'étanchéification (S) prévu entre ledit réservoir de fluide d'usinage (1) et ledit bras (31) pour permettre leur mouvement relatif et pour empêcher une grande quantité de fluides d'usinage dans le réservoir de fluide d'usinage (1) de s'écouler hors du réservoir de fluide d'usinage (1) à travers la fenêtre (4), caractérisée en ce que :
ledit mécanisme d'étanchéification (S) est recouvert d'une paroi de séparation (70) en forme de boîte en fixant à demeure cette dernière au réservoir de fluide d'usinage (1) de telle sorte que l'on peut définir un espace pratiquement fermé à l'intérieur dudit réservoir de fluide d'usinage (1), via la paroi de séparation (70) et via le mécanisme d'étanchéification (S),
un moyen d'alimentation de fluide d'usinage (74 A, B) est fixé à ladite paroi de séparation (70) pour acheminer du fluide d'usinage depuis l'extérieur jusque dans ledit espace fermé, et
ledit moyen d'alimentation de fluide d'usinage (74 A, B) est à même de remplir ledit espace fermé avec du fluide d'usinage sous pression de façon à empêcher le fluide d'usinage dans ledit réservoir de fluide d'usinage (1) d'atteindre ledit mécanisme d'étanchéification (S).

2. Machine d'étincelage à découpe par fil selon la revendication 1, dans laquelle
ladite paroi de séparation (70) en forme de boîte recouvrant ledit mécanisme d'étanchéification (S) possède une surface de paroi faisant face auxdits mécanismes d'étanchéification (S), ladite surface de paroi étant munie d'une fenêtre (71), ladite fenêtre (71) permettant la pénétration dudit bras (31) et permettant également un mouvement relatif entre la paroi de séparation (70) et le bras (31) dans une direction perpendiculaire à l'axe dudit bras (31); et
un élément de fermeture de fenêtre (72, 73) est prévu entre ledit bras (31) et la surface de paroi dans laquelle est pratiquée ladite fenêtre (71), ledit élément de fermeture de fenêtre (72, 73) permettant à ladite paroi de séparation (70) et audit bras (31) de se déplacer l'un par rapport à l'autre, tout en fermant toujours ladite fenêtre (71) en laissant un petit espace libre au cours dudit mouvement relatif.

3. Machine d'étincelage à découpe par fil selon la revendication 2, dans laquelle
ledit élément de fermeture de fenêtre (72, 73) comprend:
un élément de plaque (73) au centre duquel est pratiqué un trou d'insertion dont la dimension permet juste au bras de le traverser librement,
et un soufflet repliable (72) prévu sur les côtés droit et gauche dudit élément de plaque (73), l'extrémité de base de chaque soufflet (72) étant reliée audit élément de plaque (73) et leur extrémité distale étant fixée à ladite paroi de séparation (70) à une portion déterminée de cette dernière.

4. Machine d'étincelage à découpe par fil selon la revendication 3, dans laquelle
ledit élément de plaque (73) est fixé audit mécanisme d'étanchéification (S) via des éléments de raccordement (75) si bien que ledit élément de plaque (73) peut se déplacer solidairement avec une plaque d'étanchéification (6) constituant ledit mécanisme d'étanchéification (S).
